# EUROPEAN PATENT SPECIFICATION

(11) **EP 2 444 918 B1**
(45) Date of publication and mention of the grant of the patent: **11.12.2013**
(21) Application number: 11171819.3
(22) Date of filing: 29.06.2011
(51) Int. Cl.: G06K 9/00

(54) **Apparatus and method for providing augmented reality user interface**
Vorrichtung und Verfahren zur Bereitstellung einer erweiterten Realitätsbenutzerschnittstelle
Appareil et procédé pour fournir une interface utilisateur de réalité augmentée

(30) Priority: 22.10.2010 KR 20100103620
(43) Date of publication of application: 25.04.2012
(73) Proprietor: Pantech Co., Ltd., Seoul 121-270 (KR)
(72) Inventor: Lee, Hee-Ju, 121-270 Seoul (KR)
(74) Representative: Herzog, Markus

(56) References cited:
- US-A1- 2007 162 942
- US-A1- 2009 315 995
- US-B2- 6 411 337
- NEUMANN U ET AL: "AUGMENTED REALITY TRACKING IN NATURAL ENVIRONMENTS", MIXED REALITY. MERGING REAL AND VIRTUAL WORLDS. PROCEEDINGS OFINTERNATIONAL SYMPOSIUM ON MIX REALITY. MERGING REAL AND VIRTUALWORLDS, XX, XX, 1 January 1999 (1999-01-01), pages 101-130, XP001118695,
- CHRIS VAN AART ET AL: "Mobile Cultural Heritage Guide: Location-Aware Semantic Search", 11 October 2010 (2010-10-11), KNOWLEDGE ENGINEERING AND MANAGEMENT BY THE MASSES, SPRINGER BERLIN HEIDELBERG, BERLIN, HEIDELBERG, PAGE(S) 257 - 271, XP019155711, ISBN: 978-3-642-16437-8 * the whole document *
- V. VLAHAKIS ET AL: "Archeoguide: an augmented reality guide for archaeological sites", IEEE COMPUTER GRAPHICS AND APPLICATIONS, vol. 22, no. 5, 1 September 2002 (2002-09-01), pages 52-60, XP55034257, ISSN: 0272-1716, DOI: 10.1109/MCG.2002.1028726
- RICARDO MELO CASSEB DO CARMO ET AL: "Coordinated and Multiple Views in Augmented Reality Environment", INFORMATION VISUALIZATION, 2007. IV '07. 11TH INTERNATIONAL CONFERENCE, IEEE, PI, 1 July 2007 (2007-07-01), pages 156-162, XP031115672, ISBN: 978-0-7695-2900-4
- SEAN WHITE ET AL: "Interaction and presentation techniques for shake menus in tangible augmented reality", MIXED AND AUGMENTED REALITY, 2009. ISMAR 2009. 8TH IEEE INTERNATIONAL SYMPOSIUM ON, IEEE, PISCATAWAY, NJ, USA, 19 October 2009 (2009-10-19), pages 39-48, XP031568946, ISBN: 978-1-4244-5390-0
- WANG X., DUNSTON P.S., AND SKIBNIEWSKI M.: "MIXED REALITY TECHNOLOGY APPLICATIONSIN CONSTRUCTION EQUIPMENT OPERATOR TRAINING", PROCEEDINGS OF THE 21ST INTERNATIONALSYMPOSIUM ON AUTOMATION AND ROBOTICS IN CONSTRUCTION (ISARC 2004), JEJU, KOREA,, 21 September 2004 (2004-09-21), - 25 September 2004 (2004-09-25), XP002681123,
- JULIER S ET AL: "Information filtering for mobile augmented reality", AUGMENTED REALITY, 2000. (ISAR 2000). PROCEEDINGS. IEEE AND ACM INTERN ATIONAL SYMPOSIUM ON MUNICH, GERMANY 5-6 OCT. 2000, PISCATAWAY, NJ, USA,IEEE, US, 5 October 2000 (2000-10-05), pages 3-11, XP010520304, DOI: 10.1109/ISAR.2000.880917 ISBN: 978-0-7695-0846-7
- LOOSER J ET AL: "Through the looking glass: The use of lenses as an interface tool for augmented reality interfaces", VIRTUAL REALITY CONTINUUM AND ITS APPLICATIONS PROCEEDINGS OF THE 2004 ACM SIGGRAPH INTERNATIONAL CONFERENCE ON VIRTUAL REALITY CONTINUUM AND ITS APPLICATIONS IN INDUSTRY, ACM NEW YORK, NY, US, 15 June 2004 (2004-06-15), pages 204-211, XP007913305, ISBN: 978-1-58113-884-9
- ERICK MENDEZ ET AL: "Interactive context-driven visualization tools for augmented reality", MIXED AND AUGMENTED REALITY, 2006. ISMAR 2006. IEEE/ACM INTERNATIONAL SYMPOSIUM ON, IEEE, PI, 1 October 2006 (2006-10-01), pages 209-218, XP031014672, ISBN: 978-1-4244-0650-0
- OUILHET H.: "Google Sky Map: Using your Phone as an Interface", MOBILEHCI '10 PROCEEDINGS OF THE 12TH INTERNATIONAL CONFERENCE ON HUMAN COMPUTER INTERACTION WITH MOBILE DEVICES AND SERVICES, 7 September 2010 (2010-09-07), pages 419-422, XP002681124,

## Description

### CROSS-REFERENCE TO RELATED APPLICATION(S)

This application claims priority from and the benefit under 35 U.S.C. §119(a) of Korean Patent Application No. 10-2010-0103620, filed on October 22, 2010, the disclosure of which is incorporated herein by reference for all purposes.

### BACKGROUND

Field

The following description relates to an apparatus and method for providing an augmented reality (AR) user interface.

Discussion of the Background

Augmented reality (AR) is a computer graphic technique that combines virtual objects or information with a real-world environment to display the virtual elements as if they were present in the real environment.

Unlike a general virtual reality technology which provides only virtual objects in a virtual space, AR technology provides a view of reality which is blended with virtual objects, thereby providing supplementary information which is difficult to obtain in reality. In addition, the general virtual reality technology is applicable to only a limited range of fields, such as game technology, whereas AR can be applied to various fields.

For example, if a tourist traveling in London views a street in a certain direction through a camera built in a mobile phone having various functions, such as a global positioning system (GPS) function, the mobile phone may display augmented reality (AR) information about a surrounding environment and objects, such as restaurants and stores having a sale along the street, as an information overlay on a real street image captured by the camera.

However, as more AR data services are offered, a large amount of data is more likely to be displayed on a single screen. Thus it is not easy for the user to obtain desired information from such large amount of AR data.

### SUMMARY

Exemplary embodiments of the present invention provide an apparatus and method for providing an augmented reality (AR) information user interface, which allows a user to easily search for AR information.

Additional features of the invention will be set forth in the description which follows, and in part will be apparent from the description, or may be learned by practice of the invention.

An exemplary embodiment provides a method for providing an augmented reality (AR) user interface, the method including: acquiring an image containing at least one object; recognizing the object from the acquired image; detecting AR information related to the recognized object; classifying the detected AR information into groups according to specific property information; generating a user interface that displays the groups of AR information separately.

An exemplary embodiment provides an apparatus to provide an augmented reality (AR) user interface, the apparatus including: an image acquisition unit to acquire an image containing at least one object; a display unit to output the image acquired by the image acquisition unit and AR information; and a control unit to recognize the object from the image acquired by the image acquisition unit, detect AR information related to the recognized object, classify the detected AR information into one or more separate groups according to specific properties, and generate a user interface which displays the groups of AR information separately.

It is to be understood that both the foregoing general description and the following detailed description are exemplary and explanatory and are intended to provide further explanation of the invention as claimed. Other features and aspects may be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating an apparatus to provide an augmented reality (AR) user interface (UI) according to an exemplary embodiment.

FIG. 2 is a diagram illustrating a UI to provide AR information according to an exemplary embodiment.

FIG. 3 is a diagram illustrating a UI generated according to the context information according to an exemplary embodiment.

FIG. 4 is a diagram illustrating a UI to assist in explaining AR information according to an exemplary embodiment.

FIG. 5 is a flowchart illustrating a method for providing an AR information UI according to an exemplary embodiment.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

Terms used herein are defined in consideration of functions of embodiments, and may be modified according to the purpose and practice of a user or an operator, and thus the definition of the terms used herein should be made based on contents throughout the specification.

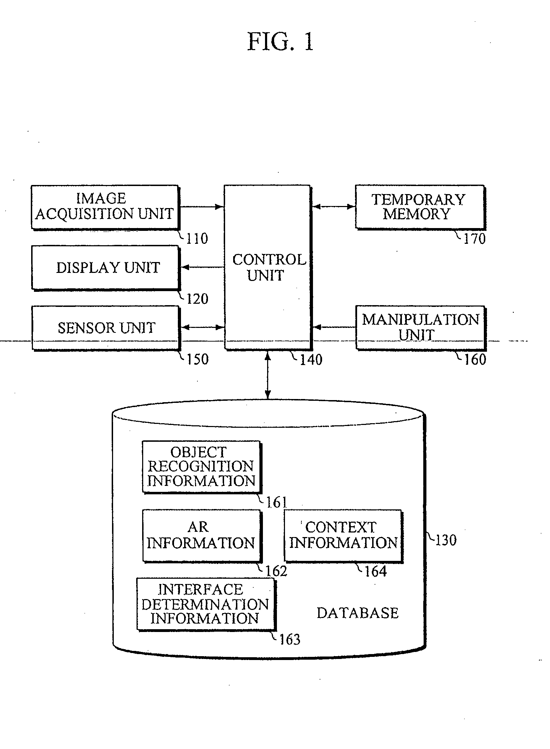

FIG. 1 is a diagram illustrating an apparatus to provide an augmented reality (AR) user interface (UI) according to an exemplary embodiment. Referring to FIG. 1, the apparatus may include an image acquisition unit 110, a display unit 120, a database 130, and a control unit 140. In addition, the apparatus may further include a sensor unit 150, a manipulation unit 160, and a temporary memory 170.

The image acquisition unit 110 may be a camera or an image sensor that acquires an image containing at least one AR object (hereinafter, referred to as an "object"). In addition, the image acquisition unit 110 may be a camera which can zoom in/out manually or automatically and/or rotate an image manually or automatically under the control of the control unit 140. The term "object" used in the description indicates a marker in real life or a marker-less-based object.

The display unit 120 may output AR information about the object contained in the image and the image output from the image acquisition unit 110 in an overlapping manner. The control unit 140 may output the AR information through a user interface (UI) which displays groups of AR information which are created according to specific properties.

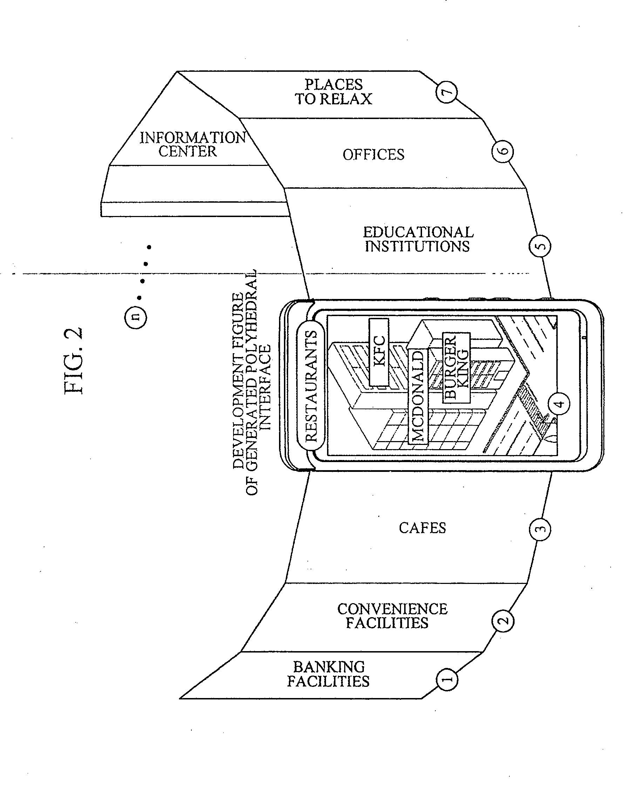

FIG. 2 is a diagram illustrating a UI to provide AR information according to an exemplary embodiment. Referring to FIG. 2, the UI provides n groups of AR information which are, respectively, provided on *n* planes. That is, pieces of AR information with respect to at least one object, as shown in FIG. 2, are classified into n groups based on the same properties, such as banking facilities, convenience facilities, cafés, restaurants, educational institutions, offices, places to relax, and information centers, and the *n* groups of AR information are respectively displayed on the different *n* planes. The n planes may be organized in a polyhedron having n surfaces corresponding to the *n* planes, and the *n* surfaces of the polyhedron may be displayed on the display unit 120.

Referring back to FIG. 1, the database 130 may store information and may be embedded in the apparatus, or may be disposed externally and provide data over a network. If the database 130 is disposed externally and provides data to the apparatus over a network, the apparatus may further include a communication interface for network communication.

The database 130 may store object recognition information 161, AR information 162, interface determination information 163, and context information 164.

The object recognition information 161 may be mapping information for recognizing an object, and may contain specific object feature information. The object feature information may include a shape, a color, a texture, a pattern, a color histogram, an architectural feature, and/or edge information of an object. The control unit 140 may determine an object by comparing acquired object recognition information with the stored object recognition information 161. In one example, the acquired object recognition information and/or the stored object recognition information 161 may include object location information, such as global positioning system (GPS) data. Thus, objects which have the same object feature information may be recognized as different objects according to their locations. The objects recognized based on the acquired object recognition information and/or the stored object recognition information 161 may be distinguished from each other by identifiers assigned thereto.

The AR information 162 may contain information related to an object. For example, if the object is a tree, the AR information 162 may be tag images that represent a name of the tree, a habitat, ecological characteristics, etc. The AR information 162 may have the same identifier as an object to be mapped.

The interface determination information 163 may be user interface determination information and may be information for generating a UI for providing detected AR information. The interface determination information 163 may include property information, which is classification criteria to classify the detected AR information, and UI formation information about how the UI is to be formed according to a size of a group.

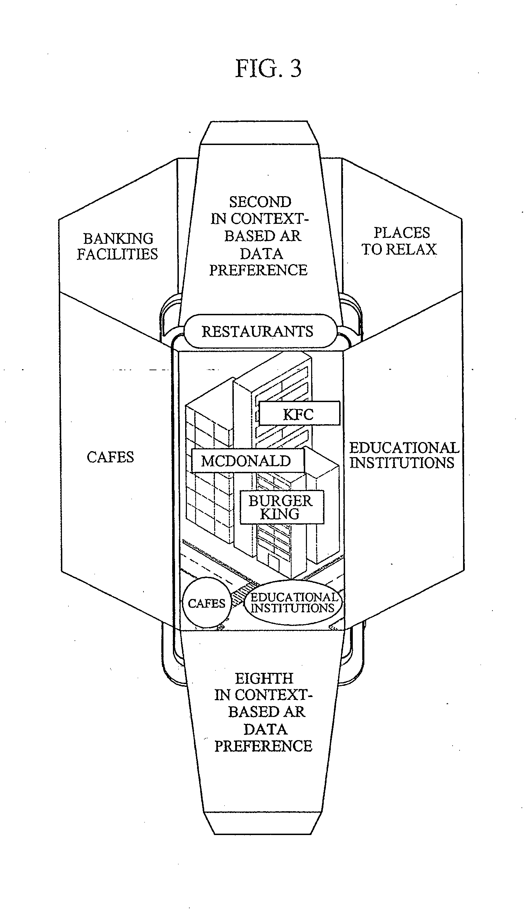

The context information 164 may include information for personalizing AR information. For example, the context information 164 may include user information containing a name, the age, and the gender of the user, information on words frequently used in the user's text messages, frequently used applications, frequently used keywords, current time zone and location, and the user's emotional state. The control unit 140 may filter AR information by use of the context information 164 and output the filtered AR information. Moreover, the context information 164 may be used by the control unit 140 to prioritize the display of AR information in the UI. FIG. 3 illustrates a UI generated according to the context information according to an exemplary embodiment.

Referring to the example illustrated in FIG. 3, the display unit 120 (see FIG. 1) displays an information group related to restaurants among AR information of objects contained in the image. In arrangement of the groups of AR information through the UI, the preference of the groups may be determined according to the context information.

Referring to the example illustrated in FIG. 3, the user's first preference may be information on restaurants. In addition, the user's next preference may be information on cafes and educational institutions, and the subsequent preference may be information on banking facilities and places to relax.

The control unit 140 may classify the AR information into groups more than two times. For example, the control unit 140 may further classify the group of restaurants into sub-groups using the context information, may display the sub-group of the restaurants of the first preference on a screen and vertically arrange the remaining sub-groups of restaurants according to rank in preference order.

The control unit 140 may control the above elements to implement an AR user interface by providing a user interface for each group of AR information, and be a hardware processor or a software module to run on the hardware processor. Operation of the control unit 140 may be described in detail with an AR object recognition guiding method which will be described later.

Referring back to FIG. 1, the sensor unit 150 may provide sensing information (for example, present time, a current location, and a photographing direction) to assist in detecting an object from an image or in detecting AR data for the object detection. The sensor unit 150 may include a GPS receiver to receive a location information signal of the camera that transmits from a GPS satellite, a gyrosensor or gyroscope to output a direction angle and inclination angle of the camera, and an acceleration sensor to measure and output a rotation direction and degrees of rotation of the camera.

The manipulation unit 160, which may be a user interface unit, may receive information from the user, and examples of the manipulation unit 160 may include a key input unit that generates key data each time a key button is pressed, a touch sensor, or a mouse. Information about moving an AR information group may be input through the manipulation unit 160. Further, the manipulation unit 160 and the display unit 120 may be combined into a touch screen.

The temporary memory 170 may store in advance AR information of an AR information group neighboring to the AR information group which is currently displayed on the display unit 120, thereby preventing processing delay which may occur in detecting AR information corresponding to the neighboring group if a group movement request signal is received through the manipulation unit 160 later.

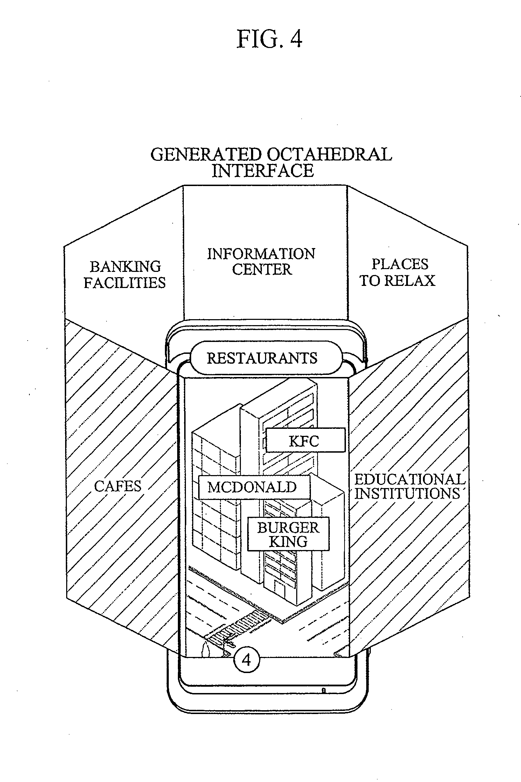

FIG. 4 is a diagram illustrating a UI to assist in explaining AR information according to an exemplary embodiment. Referring FIG. 4, AR information of restaurants is currently displayed on a screen as a surface of a polyhedron. AR information of a café group and of an educational institution group which are registered on the neighboring or adjacent surfaces of the polyhedron, adjacent to the user interface that currently displayed AR information of restaurants on the screen, are stored in the temporary memory 170 in advance. Although only two groups of AR information are described as being stored in the temporary memory 170, aspects are not limited thereto such that more or fewer groups may be stored in the temporary memory 170.

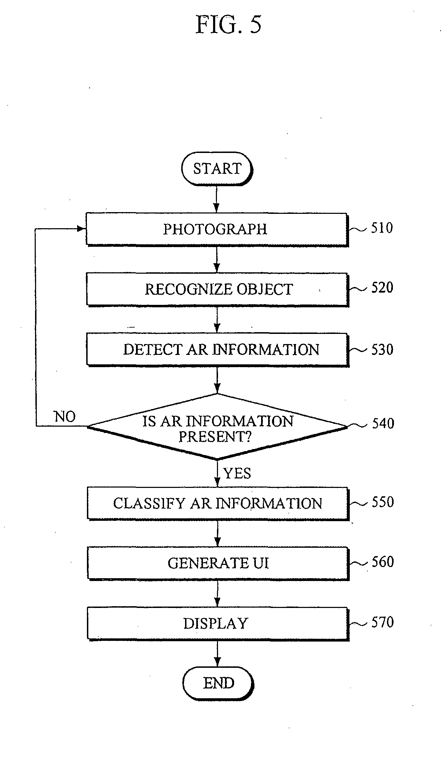

FIG. 5 is a flowchart illustrating a method for providing an AR information UI according to an exemplary embodiment. Referring to FIGS. 1 and 5, if a user sets an object recognition mode by key or touch input via the manipulation unit 160 and/or the display unit 120, the control unit 140 drives the image acquisition unit 110 to acquire an image containing at least one object in operation 510. In operation 520, the control unit 140 recognizes the object contained in the image. In this case, one or more objects may be recognized, and for example, if a plurality of buildings is included in an image, several buildings or only one building may be recognized as the object(s) according to a user's selection signal. To recognize the object, the control unit 140 may refer to location information of the terminal obtained by the sensor unit 150, the image information, and/or the object recognition information 161. The object recognition information 161 may be compared to the object of the image to recognize the object.

In operation 530, the control unit 140 detects AR information related to the recognized object. That is, AR information which has the same identifier as assigned to the recognized object is detected.

In operation 540, the control unit 140 determines whether AR information related to one or more recognized objects is present based on the detection result, i.e., there may be no AR information related to the object.

If the determination result indicates that AR information related to the recognized object is present, the control unit 140 classifies pieces of AR information into groups according to specific reference properties in operation 550. At this time, the control unit 140 may classify the AR information at least twice, that is, the control unit 140 may primarily classify the AR information into groups and secondarily classify the AR information in each group into sub-groups. However, aspects are not limited thereto such that the control unit 140 may classify the AR information once, twice, or more than twice, for example, three times.

In operation 560, the control unit 140 generates user interfaces to output the respective groups of AR information separately.

That is, the number of the user interfaces corresponds to the number of the groups of the AR information. For example, if the number of groups is n as shown in the example illustrated in FIG. 2, the control unit 140 may generate a user interface having *n* planes or surfaces. As such, the n groups may be displayed on n surfaces of a polyhedron, for example, 8 surfaces corresponding to 8 groups of AR information may be displayed on 8 surfaces of an octagon as shown in FIG. 4.

In this case, the control unit 140 may use context information to generate the user interface such that displayed AR information can be prioritized to enable efficient information searching. In operation 570, the control unit 140 displays the AR information through the generated user interface.

In addition, the control unit 140 may store or cache AR information related to the neighboring groups of AR information of the currently displayed group of AR information in the temporary memory 170. As a result, the AR information can be promptly changed upon receiving a signal for moving the current group to another group from the user, for example, the signal for moving may be a signal generated in response to a key input, a touch, a multi-touch, a swipe, and the like.

As described above, pieces of AR information related to one or more objects contained in an acquired image are classified into one or more groups, and the groups of AR information are provided separately through a user interface. Hence, the user can quickly and accurately search for desired AR information.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

An apparatus and method for providing an augmented reality (AR) user interface. The method includes acquiring an image containing at least one object; recognizing the object from the acquired image; detecting AR information related to the recognized object; classifying the detected AR information into groups according to specific property information; generating a user interface that displays the groups of AR information separately.

## Claims

1. A method of providing an augmented reality (AR) user interface, the method comprising:
acquiring an image containing a plurality of objects;
recognizing each of the objects from the acquired image;
detecting AR information related to each of the recognized objects by detecting the AR information which has the same identifier as assigned to each of the recognized objects and determining whether the AR information related to each of the recognized objects is present in a database based on the detection result;
classifying the detected AR information into groups according to specific property information;
generating a user interface that displays the groups of AR information separately,
wherein the user interface is formed as a polyhedron with a number of surfaces corresponding to the number of the groups; and
wherein the generating of the user interface comprises generating the user interface by determining the order of displaying the groups based on context information with respect to a user.

2. The method of claim 1, wherein the recognizing of the object comprises recognizing the object from the image using location information about a location at which the image has been acquired.

3. The method of claim 1, further comprising:
temporarily storing at least one group of AR information,
wherein one of the groups of AR information is displayed on the user interface as a surface of the polyhedron, and the temporarily stored group of AR information corresponds to a surface of the polyhedron adjacent to the displayed group of AR information.

4. The method of any of claims 1 to 3, further comprising:
temporarily storing at least one AR information groups other than a currently displayed AR information group.

5. The method of any of claims 1 to 4, wherein the recognizing of the object comprises recognizing the object from the image using object recognition information about an object.

6. The method of claim 5, wherein the using the object recognition information about the object comprises comparing stored object recognition information with object information of the image.

7. An apparatus to provide an augmented reality (AR) user interface, the apparatus comprising:
an image acquisition unit adapted to acquire an image containing a plurality of objects;
a display unit adapted to output the image acquired by the image acquisition unit and AR information; and
a control unit adapted to recognize each of the objects from the image acquired by the image acquisition unit, adapted to detect AR information related to each of the recognized objects by detecting the AR information which has the same identifier as assigned to each of the recognized objects and determining whether the AR information related to each of the recognized objects is present in a database based on the detection result, adapted to classify the detected AR information into one or more separate groups according to specific properties, and adapted to generate a user interface which displays the groups of AR information separately,
wherein the user ifiterface is formed as a polyhedron with a number of surfaces corresponding to the number of the groups; and
wherein the control unit is adapted to generate the user interface by determining an order of displaying the groups based on context information of a user.

8. The apparatus of claim 7, wherein the control unit is adapted to recognize the object contained in the image using location information about a location at which the image has been acquired.

9. The apparatus of claim 7 or 8, further comprising:
a temporary memory adapted to temporarily store AR information, wherein the control unit is adapted to temporarily store AR information of groups adjacent to a currently displayed group of AR information, the AR information groups being organized to correspond to surfaces of a polyhedron, and the adjacent group of AR information corresponds to a surface adjacent to a surface currently displayed.

10. The apparatus of any of claims 7 to 9, wherein the control unit is adapted to recognize the object contained in the image using stored object recognition information by comparing the stored object information with object information from the image.

## Patentansprüche

1. Verfahren zum Bereitstellen einer erweiterten Realität (Augmented Reality, AR) Benutzeroberfläche, das Verfahren umfassend:
Aufnehmen eines Bildes, das eine Mehrzahl von Objekten enthält;
Erkennen jedes der Objekte aus dem aufgenommenen Bild;
Erfassen von AR Informationen, die jedes der erkannten Objekte betreffen, durch Erfassen der AR Informationen, die den selben Identifikator wie einen, der jedem der erkannten Objekte zugeordnet ist, haben und Bestimmen basierend auf dem Erfassungsergebnis, ob die AR Informationen, die jedes der erkannten Objekte betreffen, in einer Datenbank vorhanden sind;
Einordnen der erfassten AR Informationen in Gruppen gemäß einer spezifischen Eigenschaftsinformation;
Erzeugen einer Benutzeroberfläche, die die Gruppen von AR Informationen getrennt anzeigt,
wobei die Benutzeroberfläche als ein Polyeder mit einer Anzahl von Oberflächen entsprechend der Anzahl der Gruppen gebildet ist; und
wobei das Erzeugen der Benutzeroberfläche Erzeugen der Benutzeroberfläche durch Bestimmen der Reihenfolge eines Anzeigens der Gruppen basierend auf Kontextinformationen bezüglich eines Benutzers umfasst.

2. Verfahren nach Anspruch 1, wobei das Erkennen des Objektes Erkennen des Objektes aus dem Bild unter Verwendung von einer Standortinformation über einen Standort, an dem das Bild aufgenommen worden ist, umfasst.

3. Verfahren nach Anspruch 1, ferner umfassend:
vorübergehendes Speichern wenigstens einer Gruppe von AR Informationen,
wobei eine der Gruppen von AR Informationen auf der Benutzeroberfläche als einer Oberfläche des Polyeders angezeigt wird und die vorübergehend gespeicherte Gruppe von AR Informationen einer Oberfläche des Polyeders entspricht, die neben der angezeigten Gruppe von AR Informationen liegt.

4. Verfahren nach einem der Anspüche 1 bis 3, ferner umfassend:
vorübergehendes Speichern wenigstens einer AR Informationen-Gruppe außer einer derzeit angezeigten AR Informationen-Gruppe.

5. Verfahren nach einem der Anspüche 1 bis 4, wobei das Erkennen des Objektes Erkennen des Objektes aus dem Bild unter Verwendung von einer Objekterkennungsinformation über ein Objekt umfasst.

6. Verfahren nach Anspruch 5, wobei die Verwendung der Objekterkennungsinformation über das Objekt Vergleichen einer gespeicherten Objekterkennungsinformation mit einer Objektinformation des Bildes umfasst.

7. Vorrichtung zum Bereitstellen einer erweiterten Realität (Augmented Reality, AR) Benutzeroberfläche, die Vorrichtung umfassend:
eine Bildaufnahmeeinheit, die dazu eingerichtet ist, ein Bild, das eine Mehrzahl von Objekten enthält, aufzunehmen;
eine Anzeigeeinheit, die dazu eingerichtet ist, das durch die Bildaufnahmeeinheit aufgenommene Bild und AR Informationen auszugeben; und
eine Regelungs-/Steuerungseinheit, die dazu eingerichtet ist, jedes der Objekte aus dem durch die Bildaufnahmeeinheit aufgenommenen Bild zu erkennen, dazu eingerichtet ist, AR Informationen, die jedes der erkannten Objekte betreffen, dadurch zu erfassen, dass sie die AR Informationen, die den selben Identifikator wie einen, der jedem der erkannten Objekte zugeordnet ist, haben, erfasst und basierend auf dem Erfassungsergebnis, ob die AR Informationen, die jedes der erkannten Objekte betreffen, in einer Datenbank vorhanden sind, bestimmt, dazu eingerichtet ist, die erfassten AR Informationen in eine oder mehrere getrennte Gruppen gemäß spezifischer Eigenschaften einzuordnen, und dazu eingerichtet ist, eine Benutzeroberfläche, die die Gruppen von AR Informationen getrennt anzeigt, zu erzeugen,
wobei die Benutzeroberfläche als ein Polyeder mit einer Anzahl von Oberflächen entsprechend der Anzahl der Gruppen gebildet ist; und
wobei die Regelungs-/Steuerungseinheit dazu eingerichtet ist, dadurch die Benutzeroberfläche zu erzeugen, dass sie eine Reihenfolge eines Anzeigens der Gruppen basierend auf Kontextinformationen eines Benutzers bestimmt.

8. Vorrichtung nach Anspruch 7, wobei die Regelungs-/Steuerungseinheit dazu eingerichtet ist, das Objekt, das in dem Bild enthalten ist, unter Verwendung von einer Standortinformation über einen Standort, an dem das Bild aufgenommen worden ist, zu erkennen.

9. Vorrichtung nach Anspruch 7 oder 8, ferner umfassend:
einen vorübergehenden Arbeitsspeicher, der dazu eingerichtet ist, AR Informationen vorübergehend zu speichern,
wobei die Regelungs-/Steuerungseinheit dazu eingerichtet ist, AR Informationen von Gruppen, die neben einer derzeit angezeigten Gruppe von AR Informationen liegen, vorübergehend zu speichern, wobei die AR Informationen-Gruppen derart organisiert sind, dass sie Oberflächen eines Polyeders entsprechen und die nebenliegende Gruppe von AR Informationen einer Oberfläche neben einer derzeit angezeigten Oberfläche entspricht.

10. Vorrichtung nach einem der Ansprüche 7 bis 9, wobei die Regelungs-/Steuerungseinheit dazu eingerichtet ist, das Objekt, das in dem Bild enthalten ist, unter Verwendung von einer gespeichertnen Objekterkennungsinformation durch Vergleichen der gespeicherten Objektinformation mit einer Objektinformation aus dem Bild zu erkennen.

## Revendications

1. Procédé pour fournir une interface d'utilisateur de réalité augmentée (RA), le procédé comprenant les étapes suivantes:
acquérir un image contenant une pluralité d'objets;
reconnaître chacun des objets à partir de l'image acquise;
détecter des informations RA relatives à chacun des objets reconnus en détectant les informations RA qui ont le même identifiant que celui attribué à chacun des objets reconnus et en déterminant si les informations RA relatives à chacun des objets reconnus sont présentes dans une base de données sur la base du résultat de la détection;
classer les informations RA détectées en groupes selon des informations de propriété spécifiques;
générer une interface d'utilisateur qui affiche les groupes d'informations RA séparément,
dans lequel l'interface d'utilisateur est formée comme un polyèdre présentant un certain nombre de surfaces qui correspond au nombre de groupes, et
dans lequel la génération de l'interface d'utilisateur comprend la génération de l'interface d'utilisateur en déterminant l'ordre d'affichage des groupes sur la base d'informations de contexte par rapport à un utilisateur.

2. Procédé selon la revendication 1, dans lequel la reconnaissance de l'objet comprend la reconnaissance de l'objet à partir de l'image en utilisant des informations de position relatives à une position à laquelle l'image a été acquise.

3. Procédé selon la revendication 1, comprenant en outre le stockage temporaire d'au moins un groupe d'informations RA,
dans lequel un des groupes d'informations RA est affiché sur l'interface d'utilisateur comme une surface du polyèdre, et le groupe d'informations RA temporairement stocké correspond à une surface du polyèdre adjacente au groupe d'informations RA affiché.

4. Procédé selon l'une quelconque des revendications 1 à 3, comprenant en outre le stockage temporaire d'au moins un groupe d'informations RA autre qu'un groupe d'informations RA actuellement affiché.

5. Procédé selon l'une quelconque des revendications 1 à 4, dans lequel la reconnaissance de l'objet comprend la reconnaissance de l'objet à partir de l'image en utilisant des informations de reconnaissance d'objet relatives à un objet.

6. Procédé selon la revendication 5, dans lequel l'utilisation des informations de reconnaissance d'objet relatives à l'objet comprend la comparaison des informations de reconnaissance d'objet stockées avec des informations d'objet de l'image.

7. Appareil pour fournir une interface d'utilisateur de réalité augmentée (RA), l'appareil comprenant:
une unité d'acquisition d'image adaptée pour acquérir une image contenant une pluralité d'objets;
une unité d'affichage adaptée pour sortir l'image acquise par l'unité d'acquisition d'image et des informations RA; et
une unité de commande adaptée pour reconnaître chacun des objets à partir de l'image acquise par l'unité d'acquisition d'image, adaptée pour détecter des informations RA relatives à chacun des objets reconnus en détectant les information RA qui ont le même identifiant que celui attribué à chacun des objets reconnus et en déterminant si les informations RA relatives à chacun des objets reconnus sont présentes dans une base de données sur la base du résultat de la détection, adaptée pour classer les informations RA détectées en un ou plusieurs groupe(s) séparé(s) selon des propriétés spécifiques, et adaptée pour générer une interface d'utilisateur qui affiche les groupes d'informations RA séparément,
dans lequel l'interface d'utilisateur est formée comme un polyèdre présentant un certain nombre de surfaces qui correspond au nombre de groupes, et
dans lequel l'unité de commande est adaptée pour générer l'interface d'utilisateur en déterminant un ordre d'affichage des groupes sur la base d'informations de contexte d'un utilisateur.

8. Appareil selon la revendication 7, dans lequel l'unité de commande est adaptée pour reconnaître l'objet contenu dans l'image en utilisant les informations de position relatives à une position à laquelle l'image a été acquise.

9. Appareil selon la revendication 7 ou 8, comprenant une mémoire temporaire adaptée pour stocker temporairement des informations RA, dans lequel l'unité de commande est adaptée pour stocker temporairement des informations RA de groupes adjacents au groupe d'informations RA actuellement affiché, les groupes d'informations RA étant organisés de manière à correspondre à des surfaces d'un polyèdre, et le groupe adjacent d'informations RA correspondant à une surface adjacente à une surface actuellement affichée.

10. Appareil selon l'une quelconque des revendications 7 à 9, dans lequel l'unité de commande est adaptée pour reconnaître l'objet contenu dans l'image en utilisant les informations de reconnaissance d'objet stockées en comparant les informations d'objet stockées avec les informations d'objet provenant de l'image.
